# EUROPEAN PATENT SPECIFICATION

(11) **EP 2 346 374 B1**
(45) Date of publication and mention of the grant of the patent: **12.12.2012**
(21) Application number: 09801542.3
(22) Date of filing: 16.11.2009
(51) Int. Cl.: A47C 5/12

(54) **STRUCTURE FOR RESTING FURNITURE**
STRUKTUR ZUR AUFLAGE VON MÖBELN
STRUCTURE POUR MEUBLE DE REPOS

(30) Priority: 18.11.2008 WO PCT/IT2008/000717
(43) Date of publication of application: 27.07.2011
(73) Proprietor: Salvadori, Fabio, 56034 Casciana Terme (IT); Salvadori, Federico, 56034 Casciana Terme (PI) (IT); Salvadori, Luciano, 56034 Casciana Terme (IT); Salvadori, Simone, 56034 Casciana Terme (IT)
(72) Inventor: Salvadori, Fabio, 56034 Casciana Terme (PI) (IT)
(74) Representative: Turini, Laura
(86) International application number: PCT/IB2009/007471
(87) International publication number: WO 2010/058260

(56) References cited:
- EP-A- 0 152 392
- EP-A1- 1 669 007
- EP-A2- 1 857 239
- CH-A5- 696 958
- DE-A1- 19 516 263
- DE-U1- 20 200 930
- US-A- 3 310 613
- US-A- 6 083 435
- US-A1- 2005 173 826

## Description

### Technical Field

The present invention refers to the technical field of furniture in general. In particular, it refers to a new method of processing for the realization of structures destined to the creation of resting furniture for people, particularly couches, beds, mattresses, chairs and the like.

It is also described the structure realized with such a method.

### State of the Art

The processing techniques for the realization of couches, beds and furniture components in general destined specifically for people's rest have long been known. By way of example, a realization technique of a couch (but the problem remains unchanged also in the case of other kinds of components) is described below, which passes through different processing phases that are extremely complex and expensive.

First, according to a first processing phase, a supporting framework must be realized destined to give the the couch the right rigidity and weight bearing capacity as it is known for example from EPO 152 392 A2. It is indeed required that the couch be capable of bearing the weight of the people that are seated or lying down on it. Only afterwards, around the structure so realized, an appropriate padding will be built. Once this operation is done, the couch is finally covered with the preselected linings, for example of leather or common synthetic fabrics or cotton.

According to the state of the art, the realization of the framework can be done according to different techniques. For example, a common realization is a realization in metal, which is done by combining tubes and springs. In other cases, it can be indifferently used a combination of panels and wood laths (plywood, etc.). A combination of metal and wood together or similar materials is also possible. In the case of the realization of beds, however, it is necessary to foresee to have mattress and structure separately. In particular, for the realization of the mattress it is necessary to assemble the springs to create the structure around which to realize the padding. In particular, an appropriate supporting surface is realized constituted by the springs in metal, wood or in a combination of these materials.

As indeed described in patent CH696958 A5, a structure of a chair is obtained through the coupling of different parts realized separately, namely a back 5, a seat 2 and arms 6 and 7.

It is clear how this realization method is a traditional realization and is not free from significant inconveniences, which will be described below.

First, each part destined to compose the final structure need to foresee joints (for example, gains) capable of allowing the coupling between the parts and capable of supporting the weight of the user. The realization of joints significantly complicates the realization of each single part. Moreover, each part must have the appropriate dimensions so as not to incur break risks.

The realization of a framework (no matter whether of a couch or of any other resting component) is practically an operation that does not lend itself to a complete automation and always requires the presence of the human hand, being the work of handicraft nature most of the times, also for productions that are part of preestablished series. The tubes (or laths and panels in a totally indifferent manner), after they have been custom cut, must be indeed apposed and fixed to each other according to predetermined geometries that must contribute to create the final shape. It is clear how such composition process is hardly feasible by the machines exclusively (both from the technological and economic point of view), especially if the design is variable in a broad series of possible geometries. The approaches indeed imply a remarkable number of weldings of the parts until the definite shape is obtained. It is clear how also this operation requires practically a work of handicraft nature with the continuous presence of the human hand. Indeed, also in the case in which more or less automated welding machines are used, it is anyway necessary the human presence to appose the parts, creating the final geometries, and to control anyway the quality of the welding between the parts. What has been said is also directly connected with the "numbers", though limited, of pieces to realize.

It is at this point clear how in this technical field the realization of the products is extremely expensive. Indeed, it is clear how they badly lend themselves to an industrialization, which cannot be held beyond a certain point without having as a consequence an elevated costs worsening. Not being a totally automated mass production indeed possible, the production costs remarkably increase against a quantity of pieces realized that is very reduced.

Another problem, not less important than the one described, refers to the non rare case in which the customer requests also variations on the standard production. In this case, all the more so, the production costs increase further as it is necessary to cut the pieces into dimensions that are different from the standard ones and then proceed with the welding of the same according to geometries that can be different from the ones that are commonly used.

Moreover, the handicraft features of the production remarkably bear on the so called "Lead Time", or rather the time it takes to delivery the product. Indeed, to foresee storehouses with products even partially preassembled to gain time in the production described above has a cost that is too high. For this reason, the production of each piece actually always starts from the beginning. This implies a significantly lower quantity of production and longer waiting times for the client. Obviously, the whole often means missing gains or delays in the payments.

Last but not least, another problem (anyway common in general to all fields of production in the sector) concerns the transportation. The company that produces the frameworks of the couches, or of other furniture, is often an external company in respect to the one that realizes the final padding process. In this case, it is necessary to organize the transportation towards the final production place. It is clear how the frameworks, tracing the final shape of the couch, result to be extremely cumbersome. This implies high costs for the transportation, especially if compared to the value of the transported structures, given that each truck is capable of containing a relatively limited number of pieces. It is clear how also the transportation bears on the production costs in an important manner, with a consequent increase in the selling costs.

### Disclosure of invention

It is therefore the aim of the present invention to give a new furniture realization method destined to people's rest, particularly couches, beds, mattresses/bed bases, chairs and the like that resolves all the above inconveniences.

It is therefore the aim of the present invention to provide a new method of realization of a base supporting structure that lends itself to a complete automation, increasing the production remarkably.

In particular, it is the aim of the present invention to eliminate entirely the assembling phases of many parts structural to each other (for example, by welding) for the realization of a final structure, thus economizing on the production times.

It is also the aim of the present invention to provide a method that allows the production of a base structure of which its superficial hardness or softness, as well as its overall mechanical features are controllable.

It is also the aim of the present invention to provide a realization method that does not need the realization of joints between the parts appropriately dimensioned.

These and other aims are therefore reached with the first aspect of the invention as claimed in claim 1.

Advantageously, the superficial treatment can comprise at choice one or more in combination between them of the following operations:
- Chemical and/or thermal treatment;
- Specific radiations.

The treatment with specific radiations can concern the surface of the solid body as well as the body (or part) of the monolith.

The external covering (**11**), once hardened, acquires particular mechanical features. For example, it can in fact constitute the supporting structure of the structure **7** that wraps and provides particular hardness or softness in its external areas destined to the contact with the user.

The mechanical features of the external covering are controllable through, for example, the composition of the polymer used, as well as the thickness **11** sprayed.

A polymer with features of shape memory can possibly be foreseen.

Advantageously, the operation of processing in the machine tools can comprise the programming of machineries according to one of the following choices:
- Programming of numerical control machines;
- Programming of electro-mechanical machines;
- Radiations.

Advantageously, the numerical control machines realize a chip removal and the processing cycle comprises at least an operation of milling by means of an appropriate milling cutter (**6**) or the like.

In that case, arranging the mono-block on the machines, these can be suitably programmed to obtain the desired processing cycles.

In the case in which electro-mechanical machines are used, these advantageously realize cuts to generate the surfaces of the structure according to one or more of the following methods:
- Mechanical cut method;
- Specific radiations cut method;
- High pressure liquid/gas mixtures cut method.

Among the various possible choices of material, the mono-block (**1**) can be advantageously a composite material, preferably a composite one of polymeric type with shape memory.

Advantageously, the material with shape memory has a glass transition temperature **Tg** so as to assume a second shape after the heating at a temperature that is higher than the **Tg** temperature and subsequent cooling below this temperature, maintaining it in the deformed configuration by means of an external force. The polymeric material, having memory of its original shape, can rebuild its original shape after the subsequent heating above the **Tg** temperature in the absence of the external constraint force.

Advantageously, the choice of the material with shape memory can be such by which the glass transition temperature **T_{g}** results to be a temperature equal to or higher than 50° C (Centigrade degrees).

Advantageously, at the end of the above operations of mono-block (**1**) processing in the machine tools (**4**) and possible superficial treatment, in the case of mono-block of material with shape memory, the following further operations are therefore possible:
- Heating of the structure above the **T_{g}** temperature;
- Deformation according to a predetermined shape;
- Subsequent cooling below the transition temperature maintaining the deformed configuration by means of appropriate compression means, the said cooling stabilizing the deformed shape.

This process allows to remarkably reduce the encumbrances of the finished product, making both the eventual transportation and the storage in general of the product economical and extremely convenient. Thus, this allows to always maintain the storehouses always full of products in contained spaces, assuring in this way a continuous supply of the product and eliminating entirely the time losses connected with a single production for each new purchase order received and moreover, it reduces transportation costs.

Advantageously, the deformation operation of the structure can comprise the compaction of the dimensions with an appropriate press.

Advantageously, the volume reduction can comprise one of the following choices:
- Reduction of half of the original volume;
- Reduction of a quarter of the original volume;
- Reduction inferior to a quarter of the original volume.

Advantageously, the compaction operation deforms the structure **7** into a cubic form of reduced volume with respect to the original shape.

Advantageously, after the deformation and cooling operation, the further heating over the **T_{g}** temperature to rebuild the original shape of the structure is foreseeable.

In accordance with the first aspect described, the processing of a sole monolithic piece (**1**) for obtaining of the monolithic base structure is therefore possible. Thus, it is clear how a sole processing cycle realizes the final structure eliminating entirely the inconveniences of assembling, for example, for welding of the state of the art and of critical joints.

Nevertheless, a second possibility can comprise an arrangement and processing of one or more mono-blocks for obtaining parts capable of being afterwards assembled for obtaining the final base structure **7**.

Therefore, in accordance with the second aspect of the same invention, another method is disclosed as claimed in claim 9.

In that case, therefore, not only does the superficial treatment provide the above mechanical features to the final structure **7** but it also realizes a stable connection between the parts. It is therefore not neccesary anymore to arrange each single part of complex attachment systems such as particular shapings, gains and/or adhesives, being such a function fully accomplished by the superficial treatment. Therefore, also through the realization of many parts to be combined with each other, the use of the superficial treatment significantly simplifies the production of such parts.

The sprayed polymeric material can, also in this case, be possibly of the shape memory type.

Alternatively, before the operation of combination of the parts (**7', 7**"), an operation of superficial treatment of one or more of the above parts through the spraying and/or spraying and accretion and/or injection of a polymeric material can be foreseen in such a way as to realize an external covering (**11**).

In that case, the parts are then combined with each other only after the above superficial treatments and through the use of bolts and/or glueing.

In this case, the final structure **7** obtained will anyway have all the mechanical features provided by the superficial treatment.

Also in this case, the thermal/chemical treatment is foreseeable.

Also in this case, the processing operation in the machine tools can naturally comprise the programming of machineries according to one of the following choices:
- Programming of the numerical control machines;
- Programing of electro-mechanical machines;
- Radiations.

As already said, the numerical control machines realize a chip removal with a processing cycle that comprises at least an operation of milling by means of appropriate milling cutter (**6**).

Alternatively, the electro-mechanical machines realize cuts to generate the surfaces of the structure according to one or more of the following methods:
- Meccanical cut method;
- Specific radiations cut method;
- High pressure liquid/gas mixtures cut method.

Advantageously, also in this case, one or more mono-blocks (**1**) can be of a composite material, particularly of a polymeric composite material with shape memory.

The final product obtained from them can therefore be compacted and rebuilt to the original shape exactly with the same methods described for the first embodiment above.

### Brief description of the drawings

Further features and the advantages of the present method of processing of a structure for couches, beds, mattresses, chairs and the like, according to the invention, will be clearer with the description of two embodiments that follows, made to illustrate but not limit, with reference to the annexed drawings, wherein:
- Figure 1 represents a solid body of a material in general and its arrangement on a machine tool;
- Figure 2 represents schematically a processing phase in the machine tools according to a predetermined processing cycle;
- Figure 3 represents schematically a possible superficial treatment by spraying or spraying and accretion and a section that highlights the finished product after the said treatment;
- Figure 4 represents a superficial treatment by injection while figure 5 represents a superficial treatment of the thermal and/or chemical type.
- Figure 6 and figure 7 represent a further shape of the invention wherein the processing of the mono-block or mono-blocks is described to obtain parts of base structure that make up sectional furniture.
- Figure 8 represents heating and cooling cycles to deform the base structure obtained if this is realized through the use of polymers with shape memory;
- Figure 9 represents a restoration of the original shape.

### Description of some embodiments

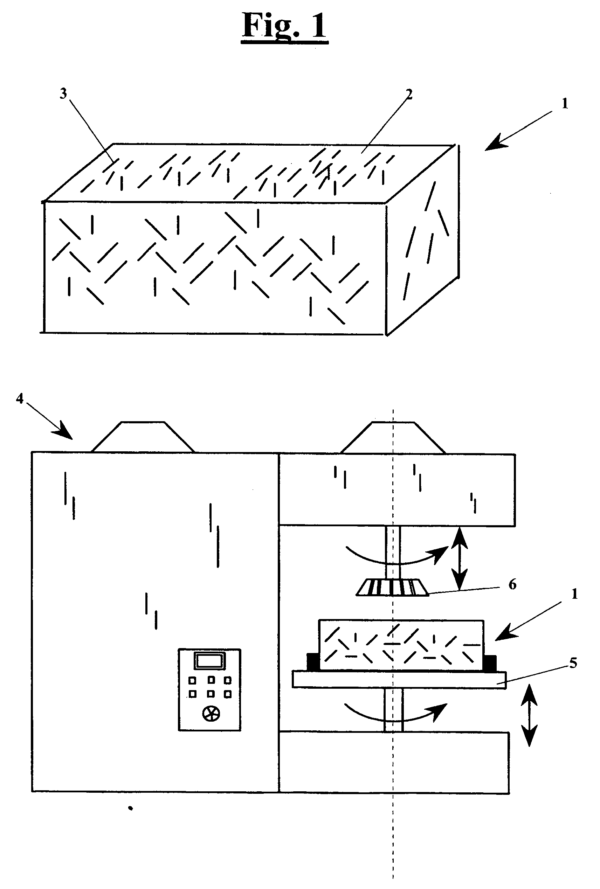

With reference to figure 1, the present innovative method for the realization of base structures constituting the framework of couches, mattresses/bed bases, beds, armchairs in general and the like is described, according to a first embodiment of the invention.

Only for descriptive simplicity, and in an absolutely non limitating manner, the reference drawings describe the realization of a base structure **7** for couches. The present description, as said, can anyway be applied to other structures of furniture in general (for example, mattresses) without for this moving apart from the present inventive concept.

As described in figure 1, the different processing phases foresee, first of all, the arrangement of a sole mono-block **1,** or body **1,** of a shape and material absolutely generic.

In figure 1 the mono-block **1** is therefore represented, in a non limiting manner, according to an original shape corresponding to a parallelepiped. The parallelepiped is therefore positioned on appropriate machine tools **4** in such a way that, through a predetermined processing cycle, it is possible to obtain the monolithic final shape **7** (in a sole piece) of the structure starting from the full original mono-block.

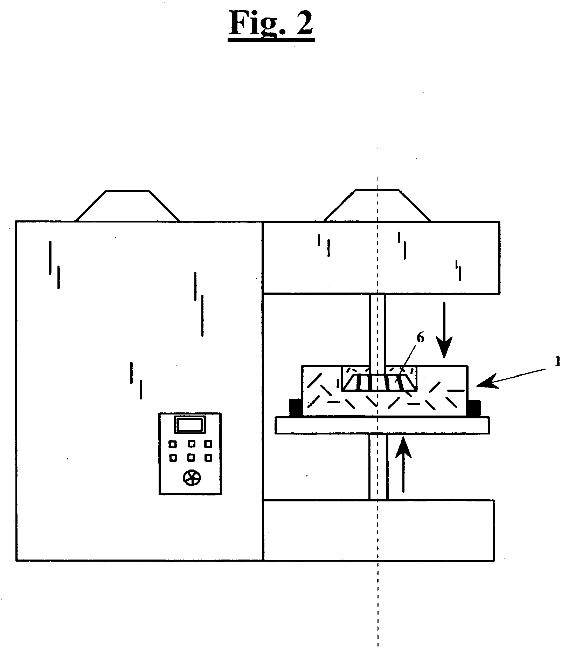

Always as represented in figure 1 and figure 2, the mono-block **1** is therefore positioned on the work-bench **5** of the machine **4.** In this case, according to a possible processing cycle, the milling cutter **6** (which has suitable features for the processing of the material in terms of constitutive material, geometry, tool cooling, etc.), beds in the material, realizing the specific geometries. Only by way of example, the milling cutter represented in figure 2 realizes the seat and the back of the couch by bedding in the mono-block **1**.

Defining, therefore, predetermined processing programmes (also on types of machines placed in series production) fully automated processing cycles can be realized, realizing not only base structures for couches, but rather a broad range of products comprising mattresses/bed bases, beds, armchairs, chairs and the like.

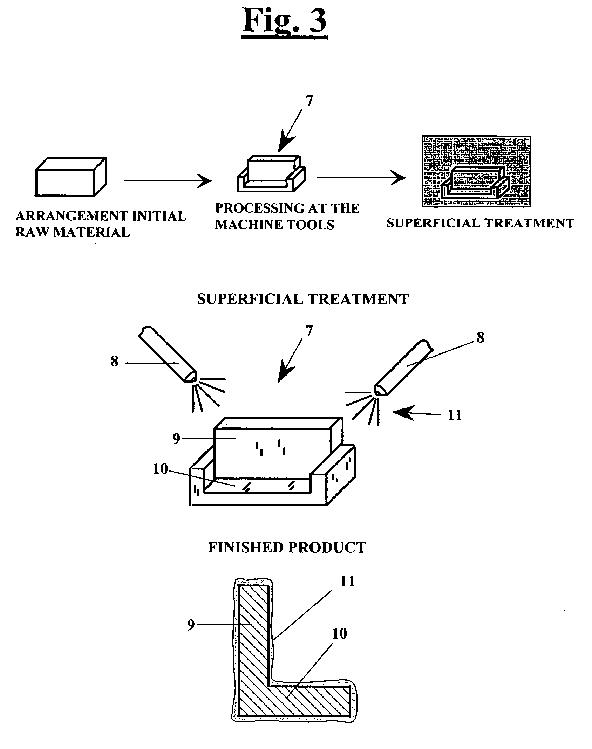

As described in figure 3, after the processing in the machine tools, it is possible to foresee a further phase of superficial treatment of the final structure **7** obtained.

A first possible treatment comprises an operation of spraying generally of a polymeric material, preferably of the polyurethane type. The polyurethane, as it is well known, is a material composed of the mixture of two components, the "Polyol" and the "Isocyanate", in preestablished percentages.

Possibly, a polymer with shape memory can be used (as also detailed in the description below).

Always figure 3, for greater clarity, schematizes this processing phase wherein one or more nozzles **8** spray the polymer **11** in a substantially fluid manner on the base structure **7** obtained. The polymer, after the spraying, wraps the structure and consolides itself, realizing an external covering **11,** similar to a shell or bark, that covers the parts in which it has been sprayed. In that sense, it can perfectly be sprayed just one part or the entire structure **7** in its totality. Thus, the structure **7** will acquire particular mechanical features (mechanical resistance) of hardness or softness on the basis of the base composition of the sprayed polymer. Always figure 3 shows, for clarity purposes, a section of the couch that shows back **9** and seat **10** and wherein the covering **11** of hardened polymeric material around the structure **7** is highlighted.

A second equivalent tecnique concerns the choice of the spraying and accretion. This is different from the previous one exclusively by the fact that the polymer used will also have expansion features in the course of time capable of providing the structure on which it has been sprayed with further particular mechanical features.

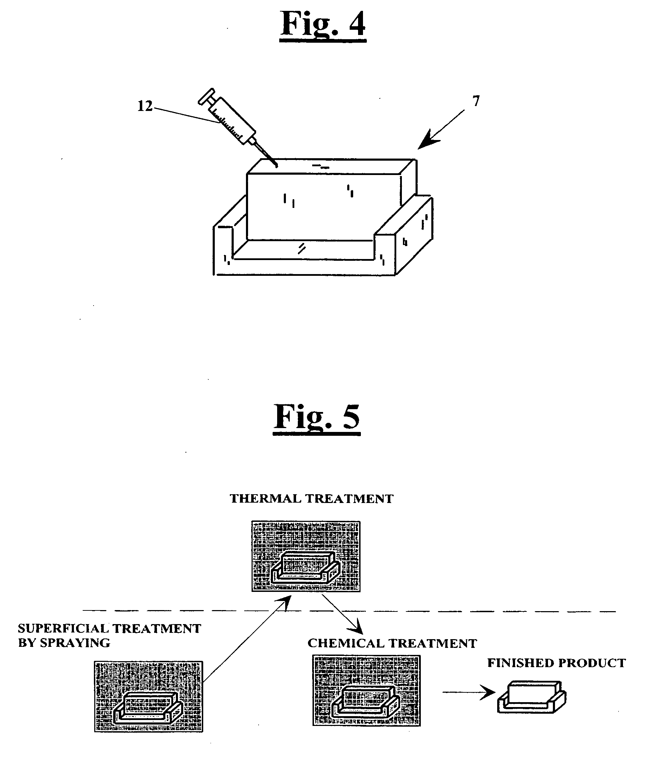

A third possibly applicable tecnique is that of the injection in one or more phases of the polymeric material. Figure 4 schematizes such a tecnique, which consists in injecting into the structure **7** the polymeric material, for example in the form of foam. The material penetrates in the superficial layers through the porosity of the material and, after the expansion, exits towards the exterior, always through the pores. The final result is therefore very similar to that represented in figure 3, wherein a certain degree of internal penetration has taken place, though. Also in this case, by controlling the type of polymer injected, the degree of hardness or softness of the covering of the structure obtained can be controlled in the spots wherein the polymer has been injected. Just for schematization purposes, figure 4 represents a syringe 12 with which the phase of injection of the polymer is represented.

In all cases, the external covering **11** realized can have variable thicknesses according to a wide range from the milimeter to more than 10 centimeters of thickness and even more.

On the other hand, a fourth option consists of a superficial treatment of chemical and/or thermal type. In that case, the spraying of other chemical agents different from the polymer and the maintenance in the firing furnace at a suitable temperature so as to give the required mechanical features or, possibly, an only thermal treatment, can be realized.

The final structure **7** can therefore be treated both in accordance with only one of the said superficial treatments and also according to a combination of two or more treatments, as described between them. For that purpose, for example, figure 5 shows a superficial treatment of spraying followed by a thermal treatment, followed in turn by a chemical treatment.

As already said, such superficial treatments, in a particular manner spraying, spraying and accretion and injection of material of a polymeric nature, have the advantage of giving particular mechanical features of resistance to the stresses, of hardness and/or softness of the structure **7** that they cover. It is then possible to process in the machine tools an original mono-block **1** of a material of low mechanical features and low cost, such as, for example, polystyrene. In that sense, in the case of a couch, for example, the base structure **7** in polystyrene obtained as in figure 3 or 4 would not be able to bear the weight of the users on its own. Nevertheless, after the spraying with a suitable and particularly hard polymeric material, for example, the hardened covering **11** gives such an overall rigidity to the structure **7** so as to guarantee to the structure itself that it can bear weights otherwise non bearable (exactly as if it had been realized in wood). Such a tecnique has therefore the advantage of allowing the processing of mono-blocks of a particularly soft material, easily mass-produced and of low cost.

Preferably, at the end of the productive cycle described, but possibly also immediately after the processing in the machine tools, a further finishing processing phase will be able to be realized, or rather a superficial modelling or shaping, necessary to give to the structure the final shape, eliminating the roughness derived from, for example, possible thermal treatments or also from the spraying and/or injection. Without losing generality, obviously, the finishing processing can also not be realized if it were considered unnecessary.

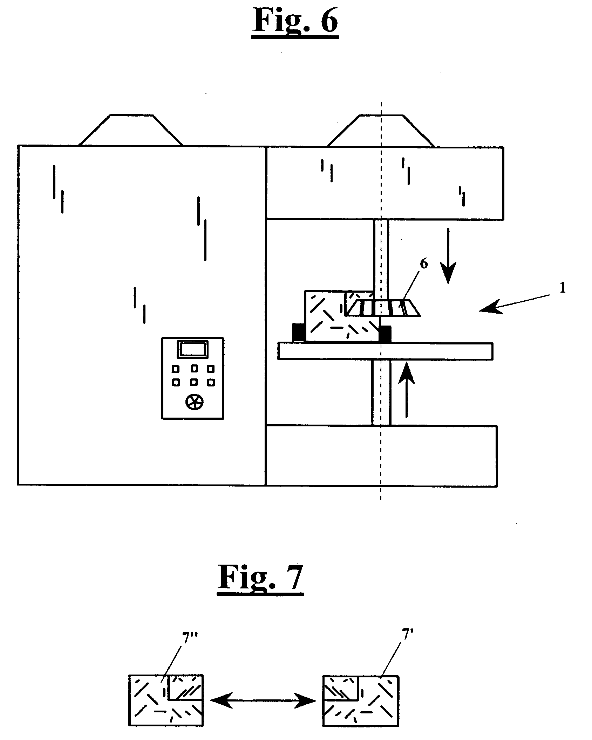

In accordance with a second embodiment of the invention (see figure 6), the same processing procedure in the machine tools can be realized in such a way as to realize two (**7', 7**") or more parts combinable with each other in a second stage, in order to obtain then the final structure **7.** Figure 6 and figure 7 show, by way of example, a schematization wherein a mono-block is processed in such a way as to obtain a first half **7'** of the structure **7,** and another mono-block is processed to obtain a second half **7",** which will then constitute the final structure **7.**

Naturally, an only mono-block can be processed according to cycles to obtain many parts of the structure that will be subsequently combinable with each other in order to obtain a final structure.

In that case, the procedure of superficial treatment previously described becomes even more important and innovative.

According to the state of the art, indeed, the realization of parts configured in such a way as to be joined between them requires a choice of materials with particular mechanical resistance features and provided with joints for realizing a solid connection between the parts.

In that sense, the superficial treatment of spraying and/or spraying and accretion and/or injection solves the problem. The simple spraying indeed realizes the external covering **11** that joins and consolidates the entire structure **7**. A couch could be realized, for example, in many parts starting from a block in simple polystyrene, lacking joints and glueing the parts between them with a common commercial weak-seal glue. At this point, the said thermal treatment gives such hardness as to make the final structure compact and ready for use, without any break risk ○ need of complex and particularly resistent joints.

Also in this case, the polymeric material of the superficial treatment is identical to that of the first configuration and therefore, possibly, with shape memory.

In both of the described configurations, naturally, the machine tools for realizing a specific processing cycle can be of different types. Without any limitation, it could be possible to use electro-mechanical machines (such as, for example, CNC machines ○ laser cutting ones or similar ones). In particular, such machines can realize mechanical cuts also by means of specific radiations (laser, etc.) or also high pressure liquid/gas mixtures. Moreover, for the aims this invention wants to reach, the numerical control or control unit machines result to be particularly suitable, being versatile and allowing this way to set rapidly different processing programmes, automating the cycle on the basis of the product to process. Indeed, the numerical control or control unit machines make simple and rapid any change in dimension or shape of the product itself, by simply setting new working coordinates.

As already said, in both of the described configurations, any type of material of the mono-block or mono-blocks can be perfectly used, without for this moving apart from the present inventive concept. Nevertheless, of particular interest for the present invention is the composite material, and in an even more particular manner, a material of the polymeric type with shape memory.

It is known already how these last ones have the capacity to maintain a modified shape after a forced deformation that took place above their specific glass transition temperature and subsequent "constrained" cooling. The subsequent heating above this temperature in the absence of constraints then rebuilds their original shape.

Getting even futher into the details, a polymer with shape memory can be heated above its specific transition temperature **T_{g}**, and once that temperature is reached, it can be deformed as required. After its cooling, by maintaining it forcedly deformed (for example, by means of presses or the like), it will maintain permanently its new deformed shape. The subsequent heating above its transition temperature, without any blocking constraint, will rebuild its original shape.

It is also known how each polymeric material, on the basis of the specific chemical composition has its own mechanical features and its own distinctive temperature. In particular, the present invention preferably points to polymeric materials with memory shape that have a transition temperature at least equal or higher than 50°C and anyway higher than the characteristic temperature of use of the product.

Thus, it is possible to use this known property of the polymeric materials with shape memory to realize a particular expansion of the productive cycle for the realization of supporting structures, as described above.

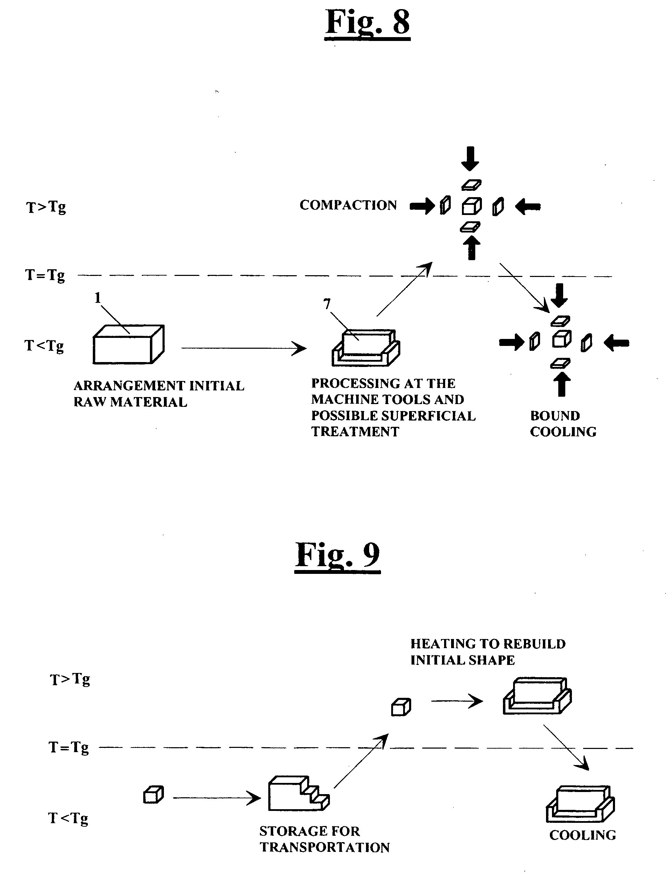

Figure 8 schematizes the present productive cycle highlighting a hypothetical reference transition termperature (dotted line **T_{g}**). Arrranging an appropriate blank **1** of polymeric material, a first phase takes place comprising a normal processing cycle in the machine tools, as described above and the possible specific superficial treatments required. Subsequently, a heating phase takes place above the **Tg** temperature with deformation according to a predetermined shape (compaction). Figure 8 shows, by way of example, a compaction according to a cubic shape by means of a press or the like. Naturally, any other type of deformation can be realized, without for this moving apart from the present inventive concept. At this point the cooling phase follows, maintaining the constrained body in its deformed configuration always by means of a press. Reached a temperature lower than the transition temperature, the body will maintain unchanged its new geometry (for example, cubic). It is possible at this point to realize a storage in storehouse or for the transportation that involves minimal encumbrances.

When the object reaches the destination (see figure 9), or at any time it is necessary, it is therefore possible to proceed with the heating above the **T_{g}** temperature that will allow the material to rebuild its original shape (shape memory), making it ready for all the subsequent processings and/or operations.

## Claims

1. Method for the realization of a base structure for couches, beds, mattresses/bed bases, chairs and the like comprising the operations of:
- Arrangement of a single mono-block (**1**) in polystyrene;
- Processing of the full mono-block in the machine tools (**4**) according to a predetermined processing cycle in such a way as to obtain a monolithic final base structure (**7**),
**Characterizing by** the fact that an operation of superficial treatment of the final structure (**7**) is subsequently foreseen, wherein the said superficial treatment comprises at choice at least one or more of the following operations:
- Superficial spraying;
- Spraying and accretion;
- Injection;
- And wherein the operations of superficial spraying and spraying and accretion comprise the spraying of a polymeric material on a part or the entire surface of the final structure (**7**) in such a way as to realize an external covering (**11)** and wherein the operation of injection comprises the injection into a part or the entire final structure (**7**) of a polymeric material of the expandible type in such a way that after the expansion through the porosities of the final structure (**7**) the external covering (**11**) is formed.

2. Method for the realization of a base structure for couches, beds, mattresses/bed bases, chairs and the like, according to claim **1**, wherein a finishing phase of the final structure (**7**) is further foreseen.

3. Method, according to claim 1, wherein the polymeric material used in sprayng operation is polyurethane.

4. Method, according to claim 1, wherein the thickness of the external covering (11) is in a range from one millimeter to more than 10 centimeters.

5. Method for the realization of a base structure for couches, beds, mattresses/bed bases, chairs and the like, according to claim **1**, wherein the said polymer used foresees a polyurethane composed of predetermined percentages of Polyol and Isocyanate.

6. Method for the realization of a base structure for couches, beds, mattresses/bed bases, chairs and similar, according to claim **1**, wherein the said operation of processing in machine tools comprises the programming of machinery according to one of the following choices:
- Programming of numerical control machines;
- Programming of electro-mechanical machines;
- Radiations.

7. Method for the realization of a base structure for couches, beds, mattresses/bed bases, chairs and the like, according to claim 6, wherein the said numerical control machines realize a chip removal and the said processing cycle comprising at least a milling operation by means of an appropriate milling cutter (**6**) or the like.

8. Method for the realization of a base structure for couches, beds, mattresses/bed bases, chairs and the like, according to claim 6, wherein the said electro-mechanical machines realize cuts to generate the surfaces of the structure according to one or more of the following methods:
- Mechanical cut method;
- Specific radiations cut method;
- High pressure liquid/gas mixtures cut method.

9. Method for the realization of a base structure for couches, beds, mattresses/bed bases, chairs and the like comprising the operations of:
- Processing in the machine tools (**4**) of the full one or more mono-blocks (**1**) in polystyrene according to predetermined processing cycles in such a way as to obtain two or more parts (**7**', **7**") subsequently combinable with each other;
- Combination of the parts between them (**7**', **7**") for obtaining a final base structure (**7**);
and **characterized by** the fact that it is further provided an operation of superficial treatment of the final base structure (**7**) obtained and comprising the spraying and/or spraying and accretion and/or injection of a polymeric material in such a way as to realize an external covering (**11**).

10. Method, according to claim 9, wherein the combination of the parts (**7**', **7**") is operated by gluing between them said parts.

11. Method, according to claim 9, wherein the thickness of the external covering (11) is in a range from one millimeter to more than 10 centimeters.

## Patentansprüche

1. Verfahren zur Realisierung einer Grundstruktur für Sofas, Betten, Matratzen/Lattenroste, Stühle und dergleichen, die folgenden Operationen umfassend:
- Anordnung eines einzelnen Monoblocks (**1**) in Polystyrol;
- Verarbeiten des vollen Monoblocks in den Werkzeugmaschinen (**4**) gemäß eines vorbestimmten Verarbeitungszyklus in einer Weise, dass eine monolithische Endgrundstruktur (**7**) erhalten wird,
**dadurch gekennzeichnet, dass** eine Operation einer oberflächlichen Behandlung der Endstruktur (**7**) anschließend vorgesehen ist, wobei die oberflächliche Behandlung wahlweise mindestens eine oder mehrere der folgenden Operationen umfasst:
- oberflächliches Besprühen;
- Besprühen und Akkretion;
- Injektion;
- wobei die Operationen des oberflächlichen Besprühens und des Besprühens und der Akkretion, das Besprühen eines Teils oder der gesamtes Oberfläche der Endstruktur (**7**) mit einem polymeren Material in einer solchen Weise umfasst, dass eine äußere Hülle (**11**) realisiert wird und wobei die Operation der Injektion die Injektion eines polymeren Materials des expandierbaren Typs in einen Teil oder die gesamte Endstruktur (**7**) in einer Weise umfasst, dass nach der Expansion durch die Porositäten der Endstruktur (**7**) die äußere Hülle (**11**) gebildet wird.

2. Verfahren zur Realisierung einer Grundstruktur für Sofas, Betten, Matratzen/Lattenroste, Stühle und dergleichen nach Anspruch **1**, wobei ferner eine Endverarbeitung der Endstruktur (**7**) vorgesehen ist.

3. Verfahren gemäß Anspruch 1, wobei das in der Besprühoperation verwendete Polymer Polyurethan ist.

4. Verfahren gemäß Anspruch 1, wobei die Dicke der äußeren Hülle (11) im Bereich von einem Millimeter bis über 10 Zentimeter liegt.

5. Verfahren zur Realisierung einer Grundstruktur für Sofas, Betten, Matratzen/Lattenroste, Stühle und dergleichen gemäß Anspruch **1**, wobei das verwendete Polymer ein Polyurethan vorsieht, das aus vorbestimmten prozentualen Anteilen an Polyol und Isocyanat zusammengesetzt ist.

6. Verfahren zur Realisierung einer Grundstruktur für Sofas, Betten, Matratzen/Lattenroste, Stühle und dergleichen gemäß Anspruch **1**, wobei die Operation des Verarbeitens in Werkzeugmaschinen das Programmieren von Maschinen gemäß einer der folgenden Möglichkeiten umfasst:
- Programmieren von numerisch gesteuerten Maschinen;
- Programmieren von elektromechanischen Maschinen;
- Strahlen.

7. Verfahren zur Realisierung einer Grundstruktur für Sofas, Betten, Matratzen/Lattenroste, Stühle und dergleichen, gemäß Anspruch **6**, wobei die numerisch gesteuerten Maschinen eine Spanabfuhr realisieren und der Verarbeitungszyklus mindestens eine Fräsoperation mittels eines geeigneten Fräswerkzeugs (**6**) oder dergleichen umfasst.

8. Verfahren zur Realisierung einer Grundstruktur für Sofas, Betten, Matratzen/Lattenroste, Stühle und dergleichen gemäß Anspruch **6**, wobei die elektromechanischen Maschinen Schnitte zum Erzeugen der Oberflächen der Struktur gemäß einem oder mehreren der folgenden Verfahren realisieren:
- mechanische Schneidverfahren;
- Spezifische Strahlenschneidverfahren;
- Hochdruckflüssigkeits-/Gasgemischschneidverfahren.

9. Verfahren zur Realisierung einer Grundstruktur für Sofas, Betten, Matratzen/Lattenroste, Stühle und dergleichen, die folgenden Operationen umfassend:
- Verarbeiten des vollen einen oder der vollen mehreren Monoblöcke (**1**) in den Werkzeugmaschinen (**4**) in Polystyrol gemäß vorbestimmte Verarbeitungszyklen in einer solchen Weise, dass zwei oder mehrere Teile (**7**', **7**") erhalten werden, die anschließend miteinander kombiniert werden können;
- Kombination der Teile untereinander (**7**', **7**") zum Erhalten einer Endgrundstruktur (**7**);
und **dadurch gekennzeichnet, dass** ferner eine Operation der oberflächlichen Behandlung der erhaltenen Endgrundstruktur (**7**) und Umfassen des Besprühens und/oder des Besprühens und der Akkretion und/oder der Injektion eines polymeren Materials in einer Weise, dass eine äußere Hülle (**11**) realisiert wird, vorgesehen ist.

10. Verfahren gemäß Anspruch 9, wobei die Kombination der Teile (7', 7") durch Verkleben der Teile durchgeführt wird.

11. Verfahren gemäß Anspruch 9, wobei die Dicke der äußeren Hülle (11) im Bereich von einem Millimeter bis über 10 Zentimeter liegt.

## Revendications

1. Une méthode pour la réalisation d'une structure de base pour les canapés-lits, lits, matelas/sommiers, chaises ou autre article similaire, comprenant les opérations suivantes :
- La prédisposition, au moins, d'un seul monobloc (**1**) en polystyrène ;
- Le travail de l'ensemble de ce monobloc sur des machines-outils (**4**), conformément à un cycle de travail prédéterminé, de sorte à obtenir une structure de base finale monolithique (**7**),
**Caractérisée par le fait qu'**une opération de traitement de surface de la structure finale (**7**) est également prévue, ce traitement de surface comprenant, au choix et au moins, une ou plusieurs des opérations suivantes :
- Pulvérisation superficielle ;
- Pulvérisation et accroissement ;
- Injection ;
- Et où les opérations de pulvérisation superficielle et de pulvérisation et d'accroissement comprennent la pulvérisation d'un polymère sur une partie ou sur toute la surface de la structure finale (**7**), de sorte à former une couche de recouvrement extérieure (**11**) et où l'opération d'injection comprend l'injection d'un polymère de type expansé sur une partie ou sur toute la structure finale (**7**), le but étant que, une fois le polymère expansé à travers dans les porosités de la structure finale (**7**), une couche de recouvrement extérieure (**11**) soit formée.

2. Une méthode pour la réalisation d'une structure de base pour les canapés-lits, lits, matelas/sommiers, chaises ou autre article similaire, conformément à la revendication 1, dans laquelle une phase de finition de la structure finale (**7**) est également prévue.

3. Une méthode, conformément à la revendication 1, dans laquelle le polymère utilisé dans le procédé de pulvérisation est du polyuréthane.

4. Une méthode, conformément à la revendication 1, dans laquelle l'épaisseur de la couche de recouvrement extérieure (11) est comprise entre 1 millimètre et plus de 10 centimètres.

5. Une méthode pour la réalisation d'une structure de base pour les canapés-lits, lits, matelas/sommiers, chaises ou autre article similaire, conformément à la revendication 1, dans laquelle ledit polymère utilisé prévoit un polyuréthane composé d'un pourcentage préfixé de polyol et d'isocyanate.

6. Une méthode pour la réalisation d'une structure de base pour les canapés-lits, lits, matelas/sommiers, chaises ou autre article similaire, conformément à la revendication 1, dans laquelle ladite opération de traitement sur des machines-outils prévoit la programmation de machines en fonction de l'une des options suivantes :
- Programmation de machines à contrôle numérique ;
- Programmation de machines électromécaniques ;
- Radiations.

7. Une méthode pour la réalisation d'une structure de base pour les canapés-lits, lits, matelas/sommiers, chaises ou autre article similaire, conformément à la revendication 6, dans laquelle lesdites machines à contrôle numérique procèdent à l'élimination des écailles et ledit cycle de traitement comprend, au moins, une opération de meulage à l'aide d'une fraise appropriée (**6**) ou similaire.

8. Une méthode pour la réalisation d'une structure de base pour les canapés-lits, lits, matelas/sommiers, chaises ou autre article similaire, conformément à la revendication 6, dans laquelle lesdites machines électromécaniques procèdent à la découpe dans le but de générer les surfaces de la structure et ce, au moyen d'une ou plusieurs des méthodes suivantes :
- Méthode de découpe mécanique ;
- Méthode de découpe spéciale par radiations ;
- Méthode de découpe utilisant un mélange de liquide/gaz sous haute pression.

9. Une méthode pour la réalisation d'une structure de base pour les canapés-lits, lits, matelas/sommiers, chaises ou autre article similaire, comprenant les opérations suivantes :
- Travail sur des machines-outils (**4**) de tout ou tous les monoblocs (**1**) en polystyrène conformément à des cycles de traitement prédéterminés et ce, dans le but d'obtenir deux ou plusieurs pièces (**7**', **7**") qui pourront être ensuite associées les unes aux autres ;
- Combinaison des pièces entre elles (**7**', **7**") pour obtenir une structure de base finale (**7**) ;
et **caractérisée par le fait qu'**elle comprend également une opération de traitement de surface de la structure de base finale (**7**) obtenue et comprend la pulvérisation et/ou pulvérisation et accroissement et/ou l'injection d'un polymère afin de former une couche de recouvrement extérieure (**11**).

10. Une méthode, conformément à la revendication 9, dans laquelle la combinaison des pièces (**7**', **7**") se fait en les collant les unes aux autres.

11. Une méthode, conformément à la revendication 9, dans laquelle l'épaisseur de la couche de recouvrement extérieure (11) est comprise entre 1 millimètre et plus de 10 centimètres.
